# EUROPÄISCHE PATENTSCHRIFT

(11) **EP 1 112 930 B1**
(45) Veröffentlichungstag und Bekanntmachung des Hinweises auf die Patenterteilung: **15.02.2006**
(21) Anmeldenummer: 00127820.9
(22) Anmeldetag: 19.12.2000
(51) Int. Cl.: B64D 13/06

(54) **Klimatisierungssystem für Flugzeugkabinen**
Air conditioning system for an aircraft cabin
Système de conditionnement d'air pour cabine d'aéronef

(30) Priorität: 27.12.1999 DE 19963280
(43) Veröffentlichungstag der Anmeldung: 04.07.2001
(73) Patentinhaber: Liebherr-Aerospace Lindenberg GmbH, 88161 Lindenberg/Allgäu (DE)
(72) Erfinder: Sauterleute, Alfred, 88178 Heimenkirch (DE)
(74) Vertreter: Laufhütte, Dieter

(56) Entgegenhaltungen:
- EP-A- 0 888 966
- US-A- 5 299 763
- US-A- 5 911 388

## Beschreibung

Die Erfindung betrifft ein Klimatisierungssystem zum Aufbereiten von unter Überdruck stehender Luft zur Klimatisierung eines Raumes, insbesondere zur Klimatisierung von Flugzeugkabinen, und ein entsprechendes Verfahren.

Die Frischluft zur Klimatisierung von Flugzeugkabinen wird üblicherweise aus der dem Triebwerk mit hohem Druck und hoher Temperatur abgezapften Luft, der sogenannten Zapfluft ("Bleed"), aufbereitet. Die Klimatisierungssysteme ziehen die zur Aufbereitung erforderliche Kühlleistung aus dem Druck- und Temperaturpotential der vorverdichteten Triebwerkluft. Die Zapfluft wird im Laufe des Frischluftaufbereitungsprozesses abgekühlt und auf den Kabinendruck von 1 bar im Bodenbetrieb bzw. etwa 0,8 bar im Flugbetrieb entspannt. Im Zuge der Frischluftaufbereitung wird die Luft auch entfeuchtet, um eine Vereisung einzelner Bestandteile des Klimatisierungssystems und eine Eiskristallbildung in der aufzubereitenden Frischluft zu verhindern. Die Notwendigkeit der Entfeuchtung besteht allerdings hauptsächlich im Bodenbetrieb, weil im Flugbetrieb, d. h. in großen Höhen, die Umgebungsluft und damit die abgezapfte Triebwerkluft ohnehin extrem trocken ist.

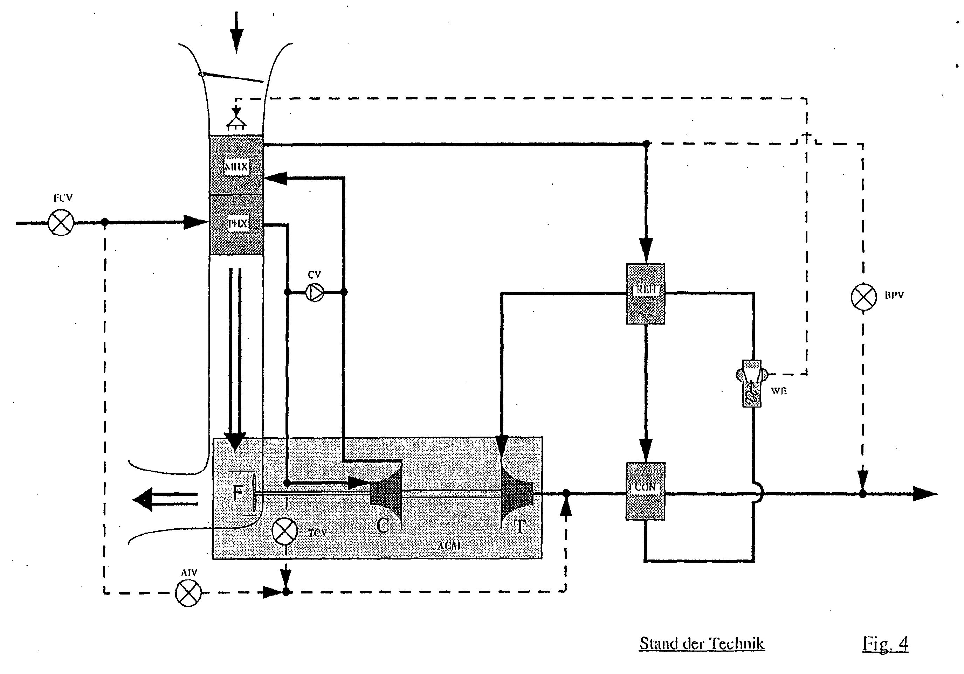

Anhand Fig. 4 wird nachfolgend ein Klimatisierungssystem beschrieben, wie es in den heutigen Passagierflugzeugen von Airbus und Boeing, beispielsweise dem A330/340 und Boe 757/767, eingesetzt wird.

Über ein Durchsatzregelventil FCV ("Flow Control Valve") wird diejenige Menge Zapfluft ("Bleed") einem Triebwerk entzogen und dem System mit 1,5 bis 3,5 bar und 150°C bis 230°C zugeführt, die zur Frischluftversorgung für die Kabine benötigt wird. Im Bodenbetrieb wird die Zapfluft einem Hilfstriebwerk entzogen und dem System mit etwa 3 bar zugeführt. Die Zapfluft wird zunächst durch einen Primärwärmetauscher PHX ("Primary Heat Exchanger") geleitet und auf ca. 100°C abgekühlt. Dann wird die Zapfluft in einem Verdichter C ("Compressor") weiter verdichtet auf ca. 4,5 bar und 160°C und in einem Hauptwärmetauscher MHX ("Main Heat Exchanger") wieder abgekühlt auf ca. 45°C. Der hohe Druck von 4,5 bar ist erforderlich, um in dem nachfolgenden Wasserabscheidekreislauf einen hohen Entfeuchtungsgrad realisieren zu können. Dieses System ist daher auch als "Hochdruckwasserabscheidekreislauf" bekannt.

Der Hochdruckwasserabscheidekreislauf umfaßt einen Kondensator CON ("Condensor"), wie er in EP 0 019 493 A3 vorgeschlagen ist, und einen dem Kondensator CON nachgeschalteten Wasserabscheider WE ("Water Extractor"). Die komprimierte, gekühlte Zapfluft wird in dem Kondensator CON um etwa ΔT = -15K abgekühlt, das kondensierte Wasser wird dann im Wasserabscheider WE abgeschieden, und anschließend wird die so entfeuchtete Luft in einer Turbine T auf den Kabinendruck von etwa 1 bar entspannt, wobei die Temperatur am Turbinenausgang etwa -30°C beträgt. Die so aufbereitete Zapfluft wird, noch bevor sie als Frischluft in einer Mischkammer mit rezirkulierter Kabinenluft vermengt wird, in wärmetauschender Weise durch den Kondensator CON des Hochdruckwasserabscheidekreislaufs geleitet, um die komprimierte, gekühlte Zapfluft auf die zur Wasserabscheidung im Wasserabscheider WE notwendige Temperatur abzukühlen. Dabei erwärmt sich die in der Turbine T entspannte und gekühlte Luft wieder entsprechend um ΔT = +15K auf etwa -15°C.

Die klimatisierte Luft wird dann in einer nicht dargestellten Mischkammer mit rezirkulierter Kabinenluft gemischt. Mittels eines Temperaturregelventils TCV kann die Temperatur am Turbinenaustritt erhöht werden, um eine optimale Mischtemperatur mit der zugemischten, rezirkulierten Kabinenluft zu erhalten. Zu diesem Zweck wird von der im Vorwärmetauscher PHX vorgekühlten Zapfluft ein Teil abgezweigt und hinter der Turbine T dem aufbereiteten Luftstrom wieder zugeführt.

In dem Hochdruckwasserabscheidekreislauf ist zusätzlich zu dem Kondensator CON ein dem Kondensator CON vorgeschalteter Wärmetauscher REH ("Reheater") vorgesehen. Durch den Wärmetauscher REH wird zunächst die komprimierte, gekühlte Zapfluft geleitet, bevor sie in den Kondensator CON eintritt, und anschließend wird durch den Wärmetauscher REH die dann entfeuchtete Luft erneut geleitet, bevor sie in die Turbine T eintritt. Der Wärmetauscher REH hat dabei im wesentlichen die Aufgabe, die entfeuchtete Luft um etwa ΔT = 5 K zu erwärmen und aus der entfeuchteten Luft Restfeuchte bei gleichzeitiger Energierückgewinnung zu verdampfen, bevor die Luft in die Turbine eintritt. Denn Restfeuchte in Form von feinen Tröpfchen kann die Turbinenradoberflächen und die Turbinendüsen (Nozzles) zerstören, da die Luft in der Tubine T nahezu Schallgeschwindigkeit erreicht. Eine zweite Funktion des Wärmetauschers REH besteht darin, den Kondensator CON zu entlasten, indem die komprimierte, gekühlte Zapfluft vor Eintritt in den Kondensator CON um entsprechend ΔT = -5K gekühlt wird.

Die in der Turbine T gewonnene Energie wird dazu benutzt, einerseits den Verdichter C und andererseits ein Gebläse F ("Fan") anzutreiben. Alle drei Räder, das heißt Turbine/Verdichter/Gebläse, sind auf einer gemeinsamen Welle angeordnet und bilden die Air Cycle Machine ACM, die auch als Drei-Rad-Maschine bezeichnet wird. Das Gebläse F fördert einen aus der Umgebungsluft abgezweigten Kühlluftstrom durch einen Kühlschacht, in dem die Primär- und Hauptwärmetauscher PHX, MHX angeordnet sind. Das Gebläse F muß insbesondere im Bodenbetrieb aktiv durch die Turbine T angetrieben werden. Im Flugbetrieb reicht die Stauluft ("Ram Air") zum Antrieb des Gebläses aus, die gegebenenfalls durch eine regelbare Klappe am Kühlschachteintritt gedrosselt werden kann.

Das Gesamtsystem ist für den Bodenbetrieb bei einer Umgebungstemperatur von 38°C ausgelegt. Um die Effektivität des Wärmetauschprozesses im Kühlschacht zu optimieren, wird das im Hochdruckwasserabscheidekreislauf gewonnene Wasser mit einer Temperatur von ca. T = 25°C und einem Druck von 3,5 bar dem Kühlschachteintritt in feinen Tröpfchen zur dortigen Verdampfung zugeführt, wodurch die Effektivität der Wärmetauscher verbessert wird.

Für den Fall, daß die Air Cycle Machine ACM vollständig ausfällt, weil zum Beispiel der notwendige Druckluftmassenstrom nicht erreichbar ist, um die für das Funktionieren des Systems erforderlichen Parameter zu erfüllen, ist ein Bypassventil BPV ("bypass valve") vorgesehen, um die Turbine T zu umgehen. In diesem Fall öffnet automatisch ein Überlastventil CV ("check valve"), indem sich vor dem Verdichter C mangels Antriebs durch die Turbine T ein das Überlastventil CV auslösender Überdruck aufbaut. Durch Öffnung des Überlastventils CV wird der Verdichter C umgangen bzw. "kurzgeschlossen". In diesem Zustand wird die Frischluft unmittelbar durch Vor- und Hauptwärmetauscher PHX, MHX direkt der dem Klimatisierungssystem nachgeschalteten Mischkammer zum Mischen mit rezirkulierter Kabinenluft zugeführt.

Wie eingangs erwähnt, stellt die Eisbildung in der aufbereiteten Frischluft ein Problem dar. Um die Eisbildung zu vermeiden, ist ein Enteisungsventil AIV ("anti icing valve") vorgesehen, mit dem unmittelbar von der dem Triebwerk abgezapften Luft ein Teil abgezweigt und hinter der Turbine T dem aufbereiteten Luftstrom wieder zugeführt wird.

Eine thermodynasch verbesserte Variante dieses Klimatisierungssystems sieht vor, daß die Air Cycle Machine ACM um eine zweite Turbine erweitert wird. Aus der Drei-Rad-Maschine Turbine/Verdichter/Gebläse wird dadurch eine Vier-Rad-Maschine Turbine/Turbine/Verdichter/Gebläse (US 5,086,622). Die zweite Turbine ist mit den übrigen Rädern auf einer gemeinsamen Welle angeordnet, um wie bei dem herkömmlichen Drei-Rad-System die durch die Turbinen gewonnene Energie in das Klimatisierungssystem zurückzuführen. Die zweite Turbine ergänzt die erste Turbine derart, daß die im Hochdruckwasserabscheidekreislauf entfeuchtete Luft in zwei Stufen entspannt wird, wobei der Kondensator des Hochdruckwasserabscheidekreislaufs in wärmetauschender Weise mit der Luftleitung zwischen den beiden Turbinen angeordnet ist. Dies ist energetisch günstiger als der herkömmliche Aufbau des Klimatisierungssystems, weil die aus der ersten Turbine austretende Luft vergleichsweise warm ist, zur Eisvermeidung vorzugsweise über 0°C, und diese Luft in dem Kondensator CON um beispielsweise ΔT = +15 Kelvin auf ein vergleichsweise hohes Energieniveau aufgewärmt wird, so daß die zweite Turbine dieses hohe Energieniveau zur Energiegewinnung nutzen kann, die bei dem herkömmlichen System verlorengeht. In Fachkreisen ist dieses System als "condensing-cycle" bekannt.

Als problematisch bei den zuvor beschriebenen Klimatisierungssystemen erweist sich das Abzapfen der aufzubereitenden Frischluft direkt aus dem Triebwerk. Denn mit sinkendem Triebwerkluftdurchsatz bei gleichbleibender Leistung steigt die Triebwerktemperatur. Da die Triebwerke aber bereits an ihrer oberen zulässigen Temperaturgrenze betrieben werden, ist ein Abzapfen der aufzubereitenden Luft aus dem Triebwerk zwangsläufig mit einer Verminderung der Triebwerkleistung verbunden.

Es wurde bereits früher vorgeschlagen, die benötigte Frischluft zur Klimatisierung der Flugzeugkabine durch einen separat angetriebenen Verdichter aus der Umgebungsluft anzusaugen und zu verdichten. Die dazu erforderliche Antriebsleistung und die dementsprechend notwendigen Antriebsmaschinen sind jedoch enorm groß und schwer, was mit den an ein Flugzeug gestellten Anforderungen nicht vereinbar ist.

Es wurde in diesem Zusammenhang auch vorgeschlagen, einen Teil der benötigten Frischluft mittels einem von der Turbine angetriebenen Verdichter aus der Umgebung anzusaugen, zu verdichten und dem Zapfluftstrom zuzuführen, um als Mischluftstrom in der Turbine entspannt und dadurch gekühlt zu werden. Es ist jedoch schwierig, ein solches System energetisch günstig in konstruktiv akzeptabler Weise umzusetzen, insbesondere hinsichtlich kompakter und wenig komplexer Bauweise sowie mit geringem Gewicht.

In der US 5,299,763 wird vorgeschlagen, den Umgebungsluftstrom und den Zapfluftstrom in der Turbine miteinander zu vereinen. Aber dieses System hat sich nicht durchsetzen können. Insbesondere sind in diesem System zwei Hochdruckwasserabscheidekreisläufe zu realisieren mit entsprechenden Gewichtsnachteilen und komplexer Bauweise. Auch die dafür eingesetzte Turbine ist durch ihre Zweiteilung äußerst komplex und vom Wirkungsgrad her nicht optimal.

Aufgabe der vorliegenden Erfindung ist es daher, ein Klimatisierungssystem und ein Klimatisierungsverfahren mit effektiver Wasserabscheidung vorzuschlagen, das einen hohen Wirkungsgrad aufweist, die Triebwerkleistung nur wenig beeinträchtigt und die obengenannten konstruktiven Nachteile vermeidet.

Diese Aufgabe wird durch ein Klimatisierungssystem und ein Klimatisierungsverfahren mit den in den nebengeordneten Patentansprüchen und davon abhängigen Ansprüchen angegebenen Merkmalen gelöst.

Dazu ist vorgesehen, daß nur ein Teil der aufzubereitenden Frischluft bei vergleichsweise hohem Druck aus dem Triebwerk abgezapft wird (Zapfluft). Der andere Teil der aufzubereitenden Frischluft wird aus der Umgebungsluft, vorzugsweise als Stauluft ("Ram Air") abgesaugt, verdichtet und mit dem unter Überdruck stehenden Zapfluftstrom zu einem Mischluftstrom vereint. Der Mischluftstrom wird dann entspannt, vorzugsweise in einer oder mehreren Turbinenstufen. Die bei der Entspannung gewonnene Energie kann regenerativ zum Verdichten des angesaugten Umgebungsluftstroms genutzt werden.

Zur Lösung der vorgenannten Aufgabe ist weiter vorgesehen, daß der Zapfluftstrom in wärmetauschender Weise am Mischluftstrom vorbeigeführt wird, um den Zapfluftstrom vor dem Zusammenführen mit dem Umgebungsluftstrom zu kühlen. Dies ist wesentlich für eine effektive Wasserabscheidung aus dem Zapfluftstrom. Die Effektivität der Wasserabscheidung resultiert insbesondere daraus, daß der an dem Zapfluftmassenstrom vorbeigeführte, kühlere Mischluftmassenstrom vergleichsweise groß gegenüber dem Zapfluftmassenstrom ist, vorzugsweise im Verhältnis von etwa 100 zu 65.

Besonders vorteilhaft ist es, wenn der Zapfluftstrom zweimal am Mischluftstrom in wärmetauschender Weise vorbeigeführt wird, nämlich einmal bevor der Mischluftstrom entspannt wird und ein anderes Mal nachdem der Mischluftstrom entspannt worden ist.

Das Wasser wird dann vorzugsweise aus dem Mischluftstrom vor der Entspannung des Mischluftstroms ausgeschieden, kann aber auch oder zusätzlich bereits zuvor aus dem verdichteten Umgebungsluftstrom bzw. dem abgekühlten Zapfluftstrom ausgeschieden werden.

Das erfindungsgemäße Klimatisierungssystem mit der sehr effektiven Wasserabscheidung aus dem Zapfluftstrom ermöglicht die Verwendung eines einzigen Wasserabscheidekreislaufs und einer herkömmlichen, dem Wasserabscheidekreislauf nachgeschalteten Turbine zur Entspannung des Mischluftstroms. Das System umfaßt in etwa die gleiche Anzahl an Komponenten wie ein Klimatisierungssystem, bei dem der gesamte aufzubereitende Kühlluftstrom vom Triebwerk abgezapft wird. Die besondere Strömungsführung des Zapfluftstroms und des verdichteten Umgebungsluftstroms durch diese Systemkomponenten ergibt ein Klimatisierungssystem mit effektiver Wasserabscheidung, das einen hohen Wirkungsgrad aufweist, wobei die Triebwerkleistung nur wenig beeinträchtigt ist und wobei das System kompakt und wenig komplex bei geringem Gewicht ausgeführt werden kann, zumal keine zusätzlichen Komponenten benötigt werden.

Das erfindungsgemäße Klimatisierungssystem besitzt somit zwei Kreisläufe, einen ersten Kreislauf für die Zapfluft und einen zweiten Kreislauf für die Umgebungsluft, die in einem Mischpunkt zusammengeführt werden, an dem sich für beide Kreisläufe derselbe Druck, das ist der Mitteldruck, einstellt. Dieser Aufbau bedingt, daß eine Änderung von Parametern in dem einen Kreislauf automatisch auf den jeweils anderen Kreislauf zurückwirkt, so daß sich ein selbstjustierendes Gesamtsystem ergibt.

Im Mischpunkt stellt sich ein Mitteldruck ein, der zwischen dem Druck der abgezapften Triebwerkluft und dem Umgebungsdruck bzw. Staudruck liegt. Die Zapfluft wird dem System mit einem Druck im Bereich von 1,5 bar im Flugbetrieb und 4 bar im Bodenbetrieb, vorzugsweise 2 bar bzw. 3,5 bar zugeführt. Das Gesamtsystem wird dann vorzugsweise so ausgelegt, daß sich bei einem Verhältnis zwischen dem Zapfluftmassenstrom und dem verdichteten Umgebungsluftmassenstrom von ca. 65 : 35 am Mischpunkt ein Mischluftdruck von ca. 3,4 bar im Bodenbetrieb einstellt.

Sowohl die Zapfluft als auch die verdichtete Umgebungsluft werden zum Zwecke der Abkühlung und nachfolgenden Wasserabscheidung zuallererst jeweils in einem Wärmetauschprozeß, beispielsweise im Kreuzgegenstrom, mit einem Kühlluftstrom aus unverdichteter und daher vergleichsweise kühler Umgebungsluft abgekühlt. Vorteilhafterweise sind der Wärmetauscher zur Abkühlung des verdichteten Umgebungsluftstroms und der Wärmetauscher zur Abkühlung des Zapfluftstroms in Reihe geschaltet, so daß sie nacheinander von dem Kühlluftstrom aus unverdichteter Umgebungsluft durchströmt werden. Dadurch kann der Strömungskanal für den Kühlluftstrom vergleichsweise schmal gehalten werden und kompakt ausgebildet sein, was sich positiv auf das Gewicht des Gesamtsystems auswirkt. Vorzugsweise ist der Wärmetauscher zum Abkühlen der verdichteten Umgebungsluft vor dem Wärmetauscher zur Abkühlung der Zapfluft angeordnet, um unter Ausnutzung des maximalen Temperaturgefälles den verdichteten Umgebungsluftstrom auf eine derart niedrige Temperatur abkühlen zu können, daß Wasser aus dem verdichteten Umgebungsluftstrom kondensiert.

Der Wirkungsgrad des Gesamtsystems kann durch geeignete Auslegung der zugehörigen Wärmetauscher optimiert werden. Ein hoher Wirkungsgrad des Wärmetauschers für die Zapfluft wird durch eine hohe Findichte erzielt, wobei ein hoher Druckabfall über den Wärmetauscher in Kauf genommen werden kann, weil die Zapfluft ohnehin bei einem vergleichsweise hohen Druck aus dem Triebwerk abgezapft wird.

Das Luftmassenstromverhältnis zwischen abgezapfter Triebwerkluft und verdichteter Umgebungsluft ist hoch und liegt vorzugsweise etwa bei 65 zu 35. Wegen des vergleichsweise geringen Massenstroms der verdichteten Umgebungsluft kann der Wärmetauscher zur Abkühlung der verdichteten Umgebungsluft mit einem hohen Wirkungsgrad bei geringerer Findichte ausgelegt werden, wobei sich ein niedriger Druckverlust über diesen Wärmetauscher einstellt. Der Wirkungsgrad ist insbesondere dann besonders hoch, wenn der gesamte Kühlluftstrom zur Kühlung des relativ kleinen Umgebungsluftstroms genutzt wird (d.h. bei Reihenschaltung der Wärmetauscher im Kühlluftströmungskanal) und wenn zusätzlich vorzugsweise die gesamte Kühlleistung aus der Verdampfung des im Hochdruckwasserabscheidekreislaufs gewonnenen Wassers diesem Wärmetauscher zur Verfügung gestellt wird.

Eine weitere Ausgestaltung der Erfindung sieht vor, daß die Entspannung der Mischluft in zwei Turbinenstufen erfolgt, wobei zwischen den beiden Turbinenstufen der Kondensator des Hochdruckwasserabscheidekreislaufs angeordnet ist. Durch diese Maßnahme kann der Wirkungsgrad des Systems weiter verbessert werden. Vorteilhafterweise wird dabei in einem zusätzlichen Wasserabscheider Wasser aus der Mischluft ausgeschieden, nachdem die Mischluft in der ersten Turbinenstufe entspannt wurde. Diese zusätzliche Wasserabscheidung ist nicht nur in dem hier beschriebenen erfindungsgemäßen Klimatisierungssystem vorteilhaft, sondern in jedem System mit zweistufiger Entspannung und dazischen angeordnetem Kondensator.

Eine noch weitere Ausgestaltung der Erfindung sieht vor, daß nicht nur die Entspannung des Mischluftstroms, sondern auch die Verdichtung der angesaugten Umgebungsluft zweistufig erfolgt, wobei jeweils ein Turbinenrad und ein Verdichterrad auf einer gemeinsamen Welle angeordnet sind. Insgesamt sind also zwei voneinander getrennte Wellen mit jeweils einem Turbinenrad und einem Verdichterrad vorgesehen. Dadurch läßt sich eine wesentlich flexiblere Auslegung des Gesamtsystems und somit ein noch höherer Wirkungsgrad insbesondere im Flugbetrieb erzielen.

In allen vorgenannten Ausführungen der Erfindung kann vorteilhafterweise auf einer gemeinsamen Welle mit dem Turbinenrad und dem Verdichterrad auch ein Motor vorgesehen sein. Dieser Motor ermöglicht es dem Klimatisierungssystem bei Spitzenlasten zusätzlich Energie zur Erzeugung von zusätzlicher Frischluftmenge und/oder Kühlleistung zuführen zu können. Im Zusammenhang mit der Ausführungsform der Erfindung, bei der zwei Wellen mit jeweils einem Turbinenrad und einem Verdichterrad vorgesehen sind, kann dieser Motor insbesondere im Flugbetrieb auch als Generator benutzt werden.

Nachfolgend wird die Erfindung anhand der Figuren 1 bis 4 beispielhaft beschrieben. Die Figuren zeigen:
- Figur 1: ein Schema zu einem erfindungsgemäßen Klimatisierungssystem;
- Figur 2: ein Schema einer verbesserten Ausführungsform des Systems aus Figur 1;
- Figur 3: ein Schema einer weiter verbesserten Ausführungsform des Systems aus Figur 2; und
- Figur 4: ein Klimatisierungssystem nach dem Stand der Technik.

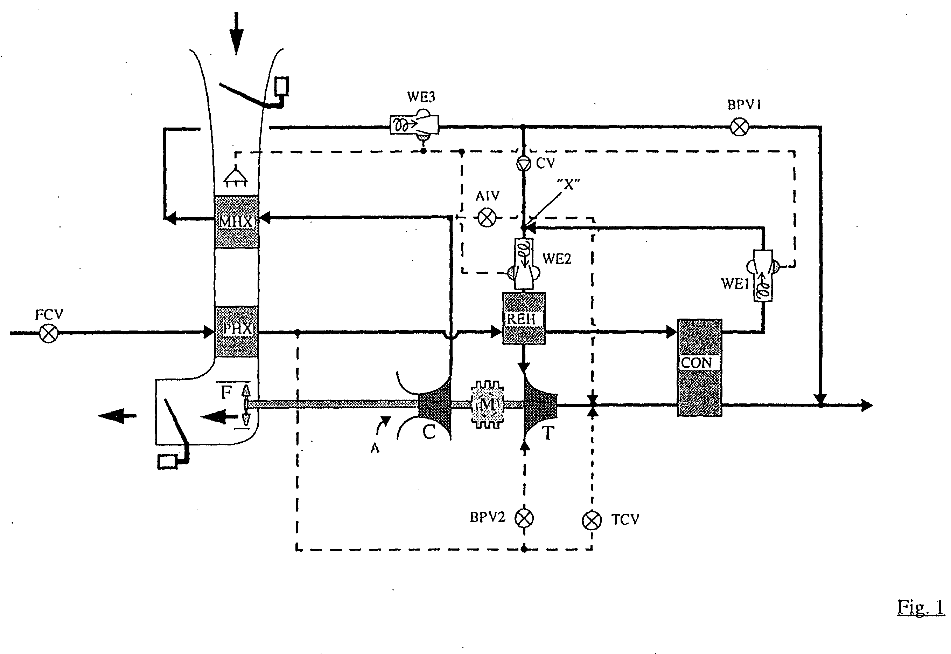

Figur 1 zeigt ein Klimatisierungssystem, das einen Zapfluftkreislauf und einen weiteren Kreislauf für aus der Umgebung angesaugte Luft ("Umgebungsluftkreislauf") umfaßt. Der Zapfluftkreislauf entspricht zum großen Teil dem anhand von Figur 4 in bezug auf den Stand der Technik beschriebenen Klimatisierungssystem. Allerdings wird der Zapfluftstrom nach Passieren des Primärwärmetauschers PHX nicht weiter verdichtet, sondern unmittelbar in den Hochdruckwasserabscheidekreislauf überführt. Eine Verdichtung des Zapfluftstroms ist nicht erforderlich, weil die Luft ohnehin bei einem vergleichsweise hohen Druck vom Triebwerk abgezapft wird. Da die Verdichtungsstufe entfällt, braucht der Zapfluftstrom auch nicht notwendigerweise durch den zweiten Wärmetauscher MHX geleitet zu werden.

Im einzelnen ist der Zapfluftstromkreislauf folgendermaßen strukturiert. Über ein Durchsatzregelventil FCV wird ein Teil des aufzubereitenden Frischluftstroms vom Triebwerk bei hohem Druck abgezapft und dem Klimatisierungssystem mit einem Eingangsdruck im Bereich von 1,5 bar im Flugbetrieb bis 4 bar im Bodenbetrieb, vorzugsweise 3,5 bar im Bodenbetrieb, zur Verfügung gestellt. Der Zapfluftstrom wird dann durch einen Stauluftwärmetauscher bzw. Primärwärmetauscher PHX geleitet und abgekühlt. In einem Hochdruckwasserabscheidekreislauf erfolgt dann eine weitere Abkühlung des Zapfluftstroms, um Feuchtigkeit aus dem Zapfluftstrom auszufällen. Dazu wird der Zapfluftstrom zunächst in einem Wärmetauscher REH an einem aus Zapfluftstrom und verdichtetem Umgebungsluftstrom gebildeten, kühlerem Mischluftstrom vorbeigeführt (noch bevor der Mischluftstrom in einer nachfolgenden Turbine entspannt wird). Im Anschluß daran wird der so vorgekühlte Zapfluftstrom durch einen als Kondensator wirkenden Wärmetauscher CON erneut an dem Mischluftstrom vorbeigeführt (wobei der Mischluftstrom jedoch inzwischen in der Turbine T entspannt und dementsprechend stark abgekühlt wurde). Der Zapfluftstrom, der vor Eintritt in den Primärwärmetauscher PHX eine Temperatur von etwa 200°C und vor Eintritt in den Wärmetauscher REH eine Temperatur von etwa 50°C hat, gelangt dann mit einer Temperatur von etwa 30°C zum Mischpunkt "X", wo er mit aufbereiteter Umgebungsluft zusammengeführt wird. Vorzugsweise wird erst nach dem Mischen des Zapfluftstroms mit dem verdichteten Umgebungsluftstrom die aus dem Zapfluftstrom ausgefällte Flüssigkeit in einem Wasserabscheider WE2 abgeschieden. Der hinter dem Kondensator CON in Fig. 1 dargestellte Wasserabscheider WE1 ist optional und kann zusätzlich oder anstelle des Wasserabscheiders WE2 vorgesehen werden.

Der Mischluftstrom wird, nach erfolgter Wasserabscheidung im Wasserabscheider WE2 und bevor er in der Turbine T entspannt wird, in dem als Reheater ausgelegten Wärmetauscher REH in wärmetauschender Weise an dem Zapfluftstrom vorbeigeführt, wodurch sich der Mischluftstrom geringfügig erwärmt. Dadurch wird einerseits der Kondensator CON im Hochdruckwasserabscheidekreislauf entlastet und andererseits wird die Turbine T vor Beschädigung durch in dem Mischluftstrom enthaltene Wassertröpfchen geschützt, die beim Durchströmen des Reheaters REH verdampfen. Nach der Entspannung und Kühlung des Mischluftstroms in der Turbine T wird der Mischluftstrom durch den Kondensator CON in wärmetauschender Weise an dem Zapfluftstrom vorbeigeleitet und dabei aufgewärmt. Der so aufbereitete Mischluftstrom wird als Frischluftstrom einer Mischkammer (nicht dargestellt) zugeführt, in der der Mischluftstrom mit rezirkulierter Kabinenluft gemischt wird.

Der Umgebungsluftkreislauf ist wie folgt aufgebaut. Ein Umgebungsluftstrom bzw. Stauluftstrom A wird über einen Verdichter C angesaugt, auf einen Mischdruck im Bereich von 1,5 bar im Flugbetrieb bis 4 bar im Bodenbetrieb, vorzugsweise auf etwa 3,4 bar im Bodenbetrieb, verdichtet und zur Abkühlung durch einen als Kondensator wirkenden Stauluftwärmetauscher MHX geleitet, bevor er im Mischpunkt "X" mit dem aufbereiteten und entfeuchteten Zapfluftstrom vereinigt wird. Des weiteren ist kurz vor dem Mischpunkt "X" ein Rückschlagventil CV vorgesehen, um ein Rückströmen zu verhindern, wenn der Druck der Zapfluft insbesondere im Flugbetrieb beim Öffnen des Bypassventils BPV1 über dem Druck der verdichteten Umgebungsluft liegt. Der in Figur 1 im verdichteten Umgebungsluftstrom dargestellte Wasserabscheider WE3 ist ebenso wie der im Zapfluftstrom vorgesehene Wasserabscheider WE1 lediglich optional als Ergänzung zu dem Wasserabscheider WE2 vorgesehen. Die beiden Wasserabscheider WE1 und WE3 können in ihrer Kombination den Wasserabscheider WE2 aber auch vollständig ersetzen.

Das in den Wasserabscheidern (WE1, WE2, WE3) abgeschiedene Wasser wird dem Stauluftwärmetauscher MHX zur dortigen Verdampfung und Kühlung insbesondere des verdichteten Umgebungsluftstroms zugeführt, wodurch sich der Wirkungsgrad des Gesamtsystems weiter erhöht.

Am Mischpunkt "X" haben der Zapfluftstrom und der verdichtete Umgebungsluftstrom den gleichen Druck von im Bodenbetrieb vorzugsweise 3,4 bar und in etwa die gleiche Temperatur. Normalerweise liegt die Temperatur des Zapfluftstroms geringfügig unter der Temperatur des verdichteten Umgebungsluftstroms. Das Massestromverhältnis zwischen Zapfluftstrom und Umgebungsluftstrom kann im Bereich von 100 : 0 (z.B. im Flugbetrieb) bis 50 : 50 liegen und beträgt vorzugsweise etwa 65 : 35 im Bodenbetrieb.

Das Verdichterrad C und die Turbine T sind zusammen mit dem Lüfter F auf einer gemeinsamen Welle angeordnet. Es handelt sich also auch hier um ein Drei-Rad-System, ähnlich der Air Cycle Machine ACM, wie in Figur 4 in bezug auf den Stand der Technik beschrieben. Das heißt, die Energie, die beim Entspannen des Mischluftstroms in der Turbine T gewonnen wird, wird genutzt, um den Verdichter C und den Lüfter F anzutreiben. Diese Energie stammt, ursprünglich aus dem Zapfluftstrom, das heißt, das hohe Energieniveau des Zapfluftstroms (m, p, T) wird im wesentlichen zur Verdichtung des Umgebungsluftstroms bzw. Stauluftstroms A genutzt.

Das zuvor beschriebene Klimatisierungssystem wird in dieser Weise insbesondere im Bodenbetrieb und in niedrigen Flughöhen eingesetzt, wo die Abscheidung der in der Luft enthaltenen Feuchtigkeit von Bedeutung ist. Im Flugbetrieb in großen Höhen dagegen ist der Druck der Umgebungsluft bzw. der Stauluft A zu gering, um im Mischpunkt "X" einen technisch sinnvollen Mischpunktdruck zu realisieren. Daher ist im Umgebungsluftkreislauf eine Bypassleitung mit einem Bypassventil BPV1 vorgesehen, über die die im Verdichter C verdichtete und im Stauluftwärmetauscher MHX abgekühlte Umgebungsluft an der Turbine T vorbeigeführt und dem entspannten, abgekühlten Zapfluftstrom erst vor der nicht dargestellten Mischkammer zugemischt wird.

Des weiteren ist ein Enteisungventil AIV vorgesehen, mit dem verdichtete Umgebungsluft aus dem Umgebungsluftkreislauf dem Mischluftstrom hinter der Turbine ungekühlt beigemischt wird, um einer Eisbildung in dem durch die Entspannung sehr stark abgekühlten Mischluftstrom entgegenzuwirken. Das Enteisungsventil hat gleichzeitig die Funktion eines Temperaturregelventils sowie eines Abblasventils zur Entlastung des Verdichters C, falls erforderlich. Zur Temperaturregelung kann aber auch oder gegebenenfalls zusätzlich Luft vom Zapfluftstrom abgezweigt und dem entspannten Mischluftstrom hinter der Turbine T beigemischt werden. Dazu dient das Temperaturregelventil TCV.

Ein zweites Bypassventil BPV 2 ist in dem Zapfluftkreislauf vorgesehen, um den Hochdruckwasserabscheidekreislauf im Flugbetrieb zu umgehen. Da im Flugbetrieb in großen Höhen ohnehin nur trockene Luft aus dem Triebwerk abgezapft wird, würde der Hochdruckwasserabscheidekreislauf zu einer unnötigen Reduzierung des Gesamtwirkungsgrads des Klimatisierungssystems führen. Das Bypassventil BPV2 wird vorzugsweise in Verbindung mit einer Dual-Nozzle-Turbine realisiert, um die Baugröße des Stauluftwärmeaustauschers PHX minimieren zu können.

In dem zuvor beschriebenen Klimatisierungssystem ist es möglich, die Stauluftwärmetauscher MHX und PHX mit einem hohen Wirkungsgrad auszulegen, indem eine geeignete Findichte für die Wärmetauscher gewählt wird. Der Wärmetauscher PHX im Zapfluftkreislauf wird von einem großen Luftmassenstrom bei einem vergleichsweise hohen Druck durchströmt. Zur Erzeugung eines hohen Wirkungsgrads kann der Wärmetauscher PHX daher mit einem relativ hohen Druckabfall für die durchströmende Zapfluft ausgelegt werden, indem der Wärmetauscher mit einer vergleichsweise hohen Findichte ausgestattet wird. Der Wärmetauscher MHX im Umgebungsluftkreislauf wird dagegen von einem vergleichsweise geringen Luftmassenstrom bei einem etwas niedrigeren Druck durchströmt. Der Druckverlust über den Wärmetauscher MHX ist auf ein minimales Maß zu begrenzen. Der Druckverlust Δp über den Wärmetauscher PHX liegt zwischen 0,05 bar und 0,3 bar, wohingegen der Druckverlust über den Wärmetauscher MHX lediglich zwischen 0,01 bar und 0,05 bar liegt.

Wie in Fig. 1 zu erkennen ist, sind die Wärmetauscher MHX und PHX in einem Kühlluftstromkanal in Serie geschaltet, so daß beide Wärmetauscher von dem gesamten Kühlluftstrom durchströmt werden. Dies bietet die eingangs erwähnten Vorteile und gestattet insbesondere eine kompakte und leichte Bauweise des Gesamtsystems.

In Fig. 1 ist desweiteren gemeinsam mit der Turbine T, dem Verdichter C und dem Gebläserad F ein Motor M auf einer gemeinsamen Welle strichliniert dargestellt, der optional in dem Klimatisierungssystem vorgesehen werden kann, um dem Klimatisierungssystem im Falle von Spitzenbelastungen zusätzlich Energie zuführen zu können (Erhöhung der Frischluftmenge und/oder der Kühlleistung).

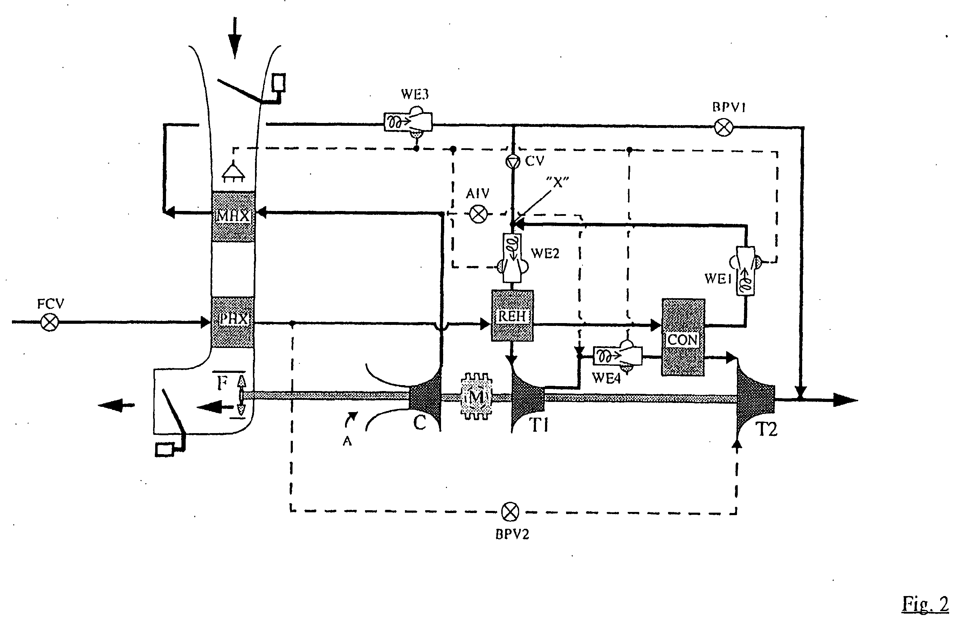

In Figur 2 ist eine weitere Ausgestaltung der Erfindung dargestellt. Zur weiteren Verbesserung des Wirkungsgrads des Gesamtsystems wird der Mischluftstrom in zwei Turbinen T 1 und T 2 zweistufig entspannt. Der Kondensator des Hochdruckwasserabscheidekreislaufs ist in diesem Fall zwischen den beiden Turbinen T 1 und T 2 angeordnet, um einen Wärmeaustausch zwischen dem enspannten und sehr kühlen Mischluftstrom und dem teilweise abgekühlten Zapfluftstrom zu gewährleisten. Ein Wasserabscheider WE4 hinter der ersten Turbine T 1 und vor dem Kondensator CON, der hier als Reheater fungiert, führt zu einer weiteren Erhöhung des Entfeuchtungsgrades der Mischluft, ist aber nicht unbedingt notwendig.

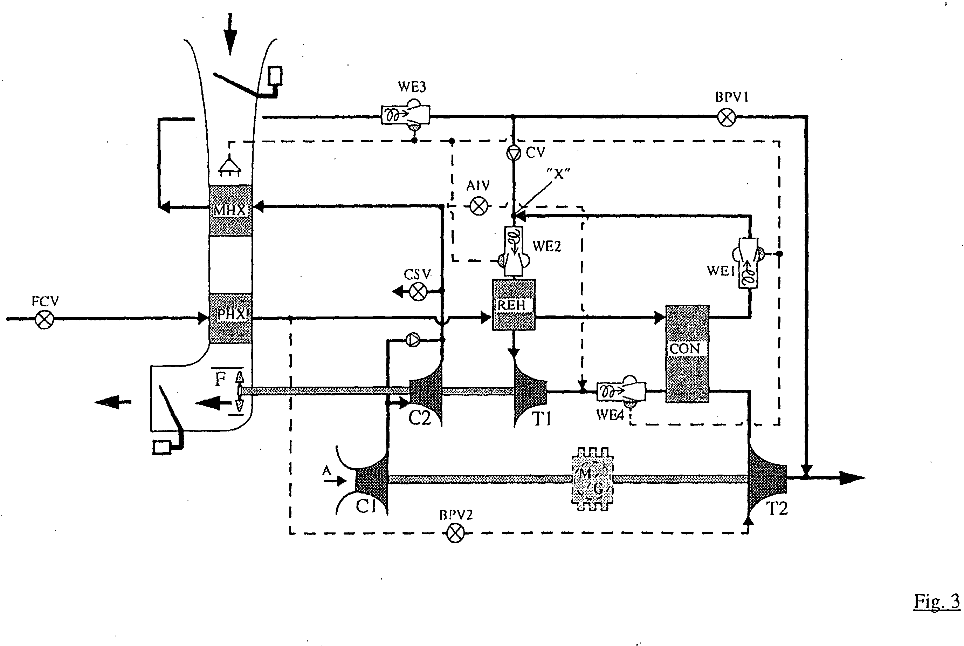

In Figur 3 ist ein Klimatisierungssystem dargestellt, das gegenüber dem in Figur 2 dargestellten System flexibler auslegbar ist, so daß ein noch höherer Wirkungsgrad des Gesamtsystems erreichbar ist. Dazu ist vorgesehen, daß die Verdichtung der Umgebungsluft A zweistufig in zwei Verdichtern C 1 und C 2 erfolgt. Indem jeweils ein Verdichterrad mit einem Turbinenrad auf einer gemeinsamen Welle angeordnet ist, insgesamt also zwei voneinander unabhängige Wellen vorgesehen sind, werden zwei voneinander getrennte Maschinen geschaffen, die je für sich optimal ausgelegt werden können. Im dargestellten Fall wird die für die erste Verdichterstufe benötigte Energie von der zweiten Turbinenstufe geliefert, und die für die zweite Verdichterstufe benötigte Energie wird von der ersten Turbinenstufe geliefert.

Die Maschine mit der Turbine T 1 und dem Verdichter C 2 kann im Flugbetrieb ausgeschaltet werden, zumal das Gebläse F im Flugbetrieb wegen des ohnehin zur Verfügung stehenden hohen Staudrucks nicht benötigt wird. Das Ausschalten der Drei-Rad-Maschine (T 1, C 2, F) wird realisiert, indem die Bypassventile BPV 1 des Umgebungsluftkreislaufes und BPV 2 des Zapfluftkreislaufes geöffnet werden.

Die Ausbildung des Klimatisierungssystems mit zwei voneinander getrennten Maschinen, umfassend jeweils Verdichter und Turbinenrad auf gemeinsamer Welle, von denen eine im Flugbetrieb abgeschaltet werden kann, bietet weitere Vorteile, die daraus resultieren, daß systembedingt im Bodenbetrieb ein größeres Druckverhältnis zur Verfügung steht als im Flugbetrieb. Dadurch ist es energetisch günstig, im Bodenbetrieb eine relativ kleine Turbinennozzle (Leitgitterquerschnitt) vorzusehen. Diese kleine Nozzle wird durch Hintereinanderschalten der beiden Turbinenstufen realisiert, wobei sich eine "Gesamtnozzle" ergibt, die kleiner ist als jede einzelne Nozzle. Im Flugbetrieb wird aber trotz eines geringeren, zur Verfügung stehenden Druckverhältnisses etwa derselbe Volumenstrom zum Klimatisieren der Flugzeugkabine benötigt, so daß im Flugbetrieb eine große Nozzle für etwa denselben Luftdurchsatz notwendig wäre. Indem im Flugbetrieb die Drei-Rad-Maschine und damit die Turbinenstufe T 1 für das Gesamtsystem ausgeschaltet wird, ergibt sich aufgrund der allein verbliebenen Turbine T 2 der zweiten Turbinenstufe für das Gesamtsystem eine große Nozzle. Dadurch kann also der Wirkungsgrad im Flugbetrieb erhöht werden. Dieser Gewinn an Wirkungsgrad wird vorzugsweise dazu genutzt, den Primär- und Hauptwärmetauscher mit möglichst geringer Baugröße und Gewicht zu gestalten unter der Randbedingung, daß die erforderliche Volumendurchflußmenge gerade noch erfüllt wird. Im Endeffekt kann also durch die Maßnahme, statt nur einer Maschine zwei Maschinen vorzusehen, eine geringere Baugröße der Wärmetauscher und damit ein geringeres Gesamtgewicht des Klimatisierungssystems erreicht werden.

Bei der in Figur 3 dargestellten Ausführungsform der Erfindung kann der mit dem Verdichter C1 und der Turbine T2 auf einer gemeinsamen Welle angeordnete Motor M, insbesondere im Flugbetrieb, auch als Generator G fungieren, wenn beispielsweise aufgrund einer nur mit wenig Passagieren besetzten Kabine nicht die volle Frischluftmenge zur Verfügung gestellt zu werden braucht. In diesem Fall wird das Abblasventil CSV ("Surge Valve") geöffnet, und das Bypassventil BPV1 geschlossen, so daß der Umgebungsluftstrom A unverdichtet über das Abblasventil CSV wieder abgeblasen wird, also nicht über das Bypassventil BPV1 der nicht dargestellten Mischkammer zugeführt wird. Der Verdichter C1 läuft dann leer mit bzw. verbraucht keinerlei Leistung, so daß die in der Turbine T2 durch die Entspannung der Zapfluft gewonnene Energie statt zur Erzeugung von verdichteter Umgebungsluft in Generatorleistung umgesetzt werden kann.

## Patentansprüche

1. Verfahren zum Aufbereiten von Luft zur Klimatisierung eines Raumes, umfassend die folgenden Schritte:
- Abzapfen eines ersten, unter Überdruck stehenden Teilluftstroms aus einem Triebwerk oder Hilfstriebwerk, dem sogenannten Zapfluftstrom,
- Abzapfen und Verdichten eines zweiten Teilluftstroms aus der Umgebung,
- Zusammenführen des Zapfluftstroms und des verdichteten Umgebungsluftstroms zur Bildung eines Mischluftstroms,
- Entspannen des Mischluftstroms und
- Weiterleiten des Mischluftstroms zur Klimatisierung eines Raumes,
wobei
der Zapfluftstrom in einem als Reheater ausgelegten Wärmetauscher (REH) in wärmetauschender Weise am Mischluftstrom vorbeigeführt wird, um den Zapfluftstrom vor dem Zusammenführen mit dem Umgebungsluftstrom zu kühlen.

2. Verfahren nach Anspruch 1, **dadurch gekennzeichnet, daß** der Zapfluftstrom am Mischluftstrom vorbeigeführt wird, nachdem der Mischluftstrom entspannt wurde.

3. Verfahren nach Anspruch 1 oder 2, **dadurch gekennzeichnet, daß** der Zapfluftstrom am Mischluftstrom vorbeigeführt wird, bevor der Mischluftstrom entspannt wird.

4. Verfahren nach einem der Ansprüche 1 bis 3, **dadurch gekennzeichnet, daß** die zum Verdichten der Umgebungsluft benötigte Energie beim Schritt des Entspannens des Mischluftstroms gewonnen und regenerativ genutzt wird.

5. Verfahren nach einem der Ansprüche 1 bis 4, **dadurch gekennzeichnet, daß** zum Verdichten der Umgebungsluft systemfremde Energie zugeführt wird.

6. Verfahren nach einem der Ansprüche 1 bis 5, **dadurch gekennzeichnet, daß** das Verhältnis des Zapfluftmassenstroms zum Umgebungsluftmassenstrom zwischen 100/0 und 50/50 liegt.

7. Verfahren nach Anspruch 6, **dadurch gekennzeichnet, daß** das Verhältnis zwischen Zapfluftmassenstrom und Umgebungsluftmassenstrom etwa 65/35 beträgt.

8. Verfahren nach einem der Ansprüche 1 bis 7, **dadurch gekennzeichnet, daß** vor dem Schritt des Entspannens des Mischluftstroms Wasser aus dem Mischluftstrom ausgeschieden wird.

9. Verfahren nach einem der Ansprüche 1 bis 8, **dadurch gekennzeichnet, daß** aus dem Zapfluftstrom und/oder dem verdichteten Umgebungsluftstrom vor dem Schritt ihres Zusammenführens Wasser ausgeschieden wird.

10. Verfahren nach einem der Ansprüche 1 bis 9, **dadurch gekennzeichnet, daß** der Umgebungsluftstrom beim Schritt des Verdichtens auf einen Druck im Bereich von 0,8 bar bis 4 bar verdichtet wird.

11. Verfahren nach einem der Ansprüche 1 bis 10, **dadurch gekennzeichnet, daß** der Zapfluftstrom mit einem Eingangsdruck im Bereich von 1,5 bar im Flugbetrieb bis 4 bar im Bodenbetrieb zu Verfügung gestellt wird.

12. Verfahren nach einem der Ansprüche 1 bis 11, **dadurch gekennzeichnet**, das die Druckverhältnisse von Zapfluftstrom und Umgebungsluftstrom so gewählt werden, daß sich ein Druck des Mischluftstroms beim Zusammenführen von Zapfluftstrom und verdichtetem Umgebungsluftstrom von etwa 3,4 bar einstellt im Bodenbetrieb.

13. Verfahren nach einem der Ansprüche 1 bis 12, **dadurch gekennzeichnet, daß** der Zapfluftstrom in wärmetauschender Weise an einem separaten Kühlluftstrom vorbeigeführt wird und dabei einen relativ hohen Druckverlust von etwa Δp = 0,05 bar bis Δp = 0,3 bar erfährt.

14. Verfahren nach einem der Ansprüche 1 bis 13, **dadurch gekennzeichnet, daß** der verdichtete Umgebungsluftstrom in wärmetauschender Weise an einem separaten Kühlluftstrom vorbeigeführt wird und dabei einen relativ geringen Druckverlust von etwa Δp = 0,01 bis Δp = 0,05 bar erfährt.

15. Verfahren nach Anspruch 13 und 14, **dadurch gekennzeichnet, daß** zunächst der verdichtete Umgebungsluftstrom und anschließend der Zapfluftstrom in wärmetauschender Weise an dem separaten Kühlluftstrom vorbeigeführt wird.

16. Verfahren nach einem der Ansprüche 13 bis 15, **dadurch gekennzeichnet, daß** aus dem Zapfluftstrom und/oder dem Mischluftstrom und/oder dem verdichteten Umgebungsluftstrom ausgeschiedenes Wasser in den separaten Kühlluftstrom zur Verdampfung zugeführt wird.

17. Verfahren nach einem der Ansprüche 1 bis 16, **dadurch gekennzeichnet, daß** das Entspannen des Mischluftstroms zweistufig erfolgt und der Mischluftstrom zwischen den beiden Entspannungsstufen in wärmetauschender Weise an dem Zapfluftstrom zur Kühlung des Zapfluftstroms vorbeigeführt wird.

18. Verfahren nach Anspruch 17, **dadurch gekennzeichnet, daß** nach dem Entspannen des Mischluftstroms Wasser aus dem Mischluftstrom abgeführt wird.

19. Verfahren nach einem der Ansprüche 1 bis 18, **dadurch gekennzeichnet, daß** der Schritt des Verdichtens des Umgebungsluftstroms und der Schritt des Entspannens des Mischluftstroms jeweils zweistufig erfolgen, wobei für jeweils eine Verdichtungsstufe Energie aus jeweils nur einer der beiden Entspannungsstufen regenerativ genutzt wird.

20. Klimatisierungssystem zum Aufbereiten von unter Überdruck stehender Luft zur Klimatisierung eines Raumes, umfassend:
- mindestens eine Verdichtereinrichtung (C; C1, C2), die mit Umgebungsluft in Verbindung steht und einen aus der Umgebungsluft stammenden Teilluftstrom verdichtet,
- mindestens eine Entspannungseinrichtung (T; T1, T2), und
- mindestens einen Wärmetauscher,
**gekennzeichnet durch**
- ein Mischelement ("X"), in dem der verdichtete Umgebungsluftstrom mit einem von einem Triebwerk abgezapften, unter Überdruck stehenden Teilluftstrom, dem sogenannten Zapfluftstrom, zu einem Mischluftstrom vereint wird,
wobei der Mischluftstrom in der mindestens einen Entspannungseinrichtung auf einen niedrigeren Druck entspannt und dabei abgekühlt wird, und wobei der mindestens eine Wärmetauscher als Reheater (REH) ausgebildet ist und einerseits vom Zapfluftstrom und andererseits vom Mischluftstrom durchströmt wird.

21. Klimatisierungssystem nach Anspruch 20, **dadurch gekennzeichnet, daß** von dem mindestens einen Wärmetauscher (REH, CON) ein Wärmetauscher (CON) so angeordnet ist, daß er von dem Mischluftstrom durchströmt wird, nachdem der Mischluftstrom in der Entspannungseinrichtung entspannt wurde.

22. Klimatisierungssystem nach Anspruch 20 oder 21, **dadurch gekennzeichnet, daß** von dem mindestens einen Wärmetauscher (REH, CON) ein Wärmetauscher so angeordnet ist, daß er von dem Mischluftstrom durchströmt wird, bevor der Mischluftstrom in der Entspannungseinrichtung entspannt wird.

23. Klimatisierungssystem nach einem der Ansprüche 20 bis 22, **dadurch gekennzeichnet, daß** die Entspannungseinrichtung (T; T1, T2) mindestens ein Turbinenrad und die Verdichtereinrichtung (C; C1, C2) mindestens ein Verdichterrad auf gemeinsamer Welle aufweisen.

24. Klimatisierungssystem nach einem der Ansprüche 20 bis 23, **dadurch gekennzeichnet, daß** ein Motor zum Zuführen von systemfremder Energie für die Verdichtereinrichtung vorgesehen ist.

25. Klimatisierungssystem nach einem der Ansprüche 20 bis 24, **dadurch gekennzeichnet, daß** die Verdichtereinrichtung (C; C1, C2) und die Entspannungseinrichtung (T; T1, T2) so ausgelegt sind, daß das Verhältnis zwischen dem geförderten Zapfluftmassenstrom und dem geförderten Umgebungsluftmassenstrom im Bereich von 100/0 und 50/50 liegt.

26. Klimatisierungssystem nach Anspruch 25, **dadurch gekennzeichnet, daß** das Verhältnis zwischen Zapfluftmassenstrom und Umgebungsluftmassenstrom in etwa 65/35 beträgt.

27. Klimatisierungssystem nach einem der Ansprüche 20 bis 26, **dadurch gekennzeichnet, daß** zwischen dem Mischelement ("X") und der Entspannungseinrichtung (T; T1) ein Wasserabscheider (WE2) angeordnet ist.

28. Klimatisierungssystem nach einem der Ansprüche 20 bis 27, **dadurch gekennzeichnet, daß** in Strömungsrichtung vor dem Mischelement ("X") ein Wasserabscheider (WE1; WE3) zum Ausscheiden von Wasser aus dem verdichteten Umgebungsluftstrom und/oder dem Zapfluftstrom vorgesehen ist.

29. Klimatisierungssystem nach einem der Ansprüche 20 bis 28, **dadurch gekennzeichnet, daß** das System so ausgelegt ist, daß sich ein Druck des Mischluftstroms am Mischelement ("X") von etwa 3,4 bar einstellt.

30. Klimatisierungssystem nach einem der Ansprüche 20 bis 29, **dadurch gekennzeichnet, daß** der Zapfluftstrom und der Umgebungsluftstrom durch eigens dafür vorgesehene zusätzliche Wärmetauscher (PHX bzw. MHX) an einem Kühlluftstrom vorbeigeführt werden, wobei einer der zusätzlichen Wärmetauscher (MHX) zur Kühlung des verdichteten Umgebungsluftstroms dient und in Strömungsrichtung des Kühlluftstroms vor dem zusätzlichen Wärmetauscher (PHX) angeordnet ist, der zur Kühlung des Zapfluftstroms dient.

31. Klimatisierungssystem nach Anspruch 30, **dadurch gekennzeichnet, daß** eine Wassereinspritzvorrichtung vorgesehen ist, mit der aus dem Zapfluftstrom und/oder aus dem Mischluftstrom und/oder aus dem verdichteten Umgebungsluftstrom ausgeschiedenes Wasser vor dem Wärmetauscher (MHX), der zur Kühlung des verdichteten Umgebungsluftstroms dient, in dem Kühlluftstrom zur dortigen Verdampfung zugeführt wird.

32. Klimatisierungssystem nach einem der Ansprüche 21 bis 31, **dadurch gekennzeichnet, daß** die Entspannungseinrichtung zwei Turbinenstufen (T1, T2) umfaßt und der Wärmetauscher (CON) zwischen den beiden Turbinenstufen angeordnet ist.

33. Klimatisierungssystem nach Anspruch 32, **dadurch gekennzeichnet, daß** zwischen den beiden Turbinenstufen (T1, T2) ein Wasserabscheider (WE4) angeordnet ist.

34. Klimatisierungssystem nach einem der Ansprüche 20 bis 33, **dadurch gekennzeichnet, daß** der Verdichter zwei Verdichterräder (C1, C2) auf getrennten Wellen umfasst und jedes Verdichterrad (C1, C2) jeweils mit nur einem Turbinenrad (T2 bzw. T1) auf gemeinsamer Welle angeordnet ist.

35. Klimatisierungssystem nach Anspruch 34, **dadurch gekennzeichnet, daß** eine der Wellen zusätzlich mit einem Motor (M) ausgerüstet ist, der auch als Generator (G) wirken kann.

36. Klimatisierungssystem nach Anspruch 35, **dadurch gekennzeichnet, daß** in Strömungsrichtung des Umgebungsluftstroms hinter der Verdichtereinrichtung (C1, C2) ein Abblasventil (CSV) vorgesehen ist, um die angesaugte Umgebungsluft weitgehend unverdichtet abzublasen.

37. Klimatisierungssystem nach einem der Ansprüche 20 bis 35, **dadurch gekennzeichnet, daß** ein Bypassventil (BPV1) vorgesehen ist, um im Flugbetrieb den verdichteten Umgebungsluftstrom dem Zapfluftstrom erst nach dessen Entspannung zuzumischen.

38. Klimatisierungssystem nach einem der Ansprüche 20 bis 37, **dadurch gekennzeichnet, daß** ein Bypassventil (BPV2) vorgesehen ist, um im Flugbetrieb den Zapfluftstrom am Mischelement ("X") vorbei direkt der Entspannungseinrichtung (T; T1, T2) zuzuleiten.

## Claims

1. Method for preparing air for the air-conditioning of a space, comprising the following steps:
- tapping off a first partial air stream, which is at superatmospheric pressure, from an engine or auxiliary power unit, referred to as the bleed air stream,
- tapping off and compressing a second partial air stream from the environment,
- combining the bleed air stream and the compressed ambient air stream to form a mixed air stream,
- expanding the mixed air stream, and
- passing on the mixed air stream to be used for the air-conditioning of a space,
in which method
the bleed air stream is guided past the mixed air stream in such a manner as to exchange heat in a heat exchanger (REH) designed as a reheater, in order for the bleed air stream to be cooled before it is combined with the ambient air stream.

2. Method according to Claim 1, **characterized in that** the bleed air stream is guided past the mixed air stream after the mixed air stream has been expanded.

3. Method according to Claim 1 or 2, **characterized in that** the bleed air stream is guided past the mixed air stream before the mixed air stream is expanded.

4. Method according to one of Claims 1 to 3, **characterized in that** the energy which is required to compress the ambient air is obtained in the step of expanding the mixed air stream and utilized regeneratively.

5. Method according to one of Claims 1 to 4, **characterized in that** system-external energy is supplied for the compression of the ambient air.

6. Method according to one of Claims 1 to 5, **characterized in that** the ratio of the bleed air mass flow to the ambient air mass flow is between 100/0 and 50/50.

7. Method according to Claim 6, **characterized in that** the ratio between bleed air mass flow and ambient air mass flow is approximately 65/35.

8. Method according to one of Claims 1 to 7, **characterized in that** water is extracted out of the mixed air stream prior to the step of expanding the mixed air stream.

9. Method according to one of Claims 1 to 8, **characterized in that** water is extracted out of the bleed air stream and/or the compressed ambient air stream prior to the step of combining these air streams.

10. Method according to one of Claims 1 to 9, **characterized in that** the ambient air stream is compressed to a pressure in the range from 0.8 bar to 4 bar during the compression step.

11. Method according to one of Claims 1 to 10, **characterized in that** the bleed air stream is made available at an admission pressure in the range from 1.5 bar when flying to 4 bar when on the ground.

12. Method according to one of Claims 1 to 11, **characterized in that** the pressure ratios of bleed air stream and ambient air stream are selected in such a way that a pressure of the mixed air stream when the bleed air stream and compressed ambient air stream are combined of approximately 3.4 bar is established when on the ground.

13. Method according to one of Claims 1 to 12, **characterized in that** the bleed air stream is guided past a separate cooling air stream in such a manner as to exchange- heat, and in the process experiences a relatively high pressure loss of approximately Δp = 0.05 bar to Δp = 0.3 bar.

14. Method according to one of Claims 1 to 13, **characterized in that** the compressed ambient air stream is guided past a separate cooling air stream in such a manner as to exchange heat, and in the process experiences a relatively low pressure loss of approximately Δp = 0.01 to Δp = 0.05 bar.

15. Method according to Claims 13 and 14, **characterized in that** first the compressed ambient air stream and then the bleed air stream are guided past the separate cooling air stream in such a manner as to exchange heat.

16. Method according to one of Claims 13 to 15, **characterized in that** water which has been extracted out of the bleed air stream and/or the mixed air stream and/or the compressed ambient air stream is fed into the separate cooling air stream in order to be evaporated.

17. Method according to one of Claims 1 to 16, **characterized in that** the expansion of the mixed air stream is carried out in two stages, and between the two expansion stages the mixed air stream is guided past the bleed air stream in such a manner as to exchange heat, in order to cool the bleed air stream.

18. Method according to Claim 17, **characterized in that** after the expansion of the mixed air stream, water is discharged from the mixed air stream.

19. Method according to one of Claims 1 to 18, **characterized in that** the step of compressing the ambient air stream and the step of expanding the mixed air stream in each case take place in two stages, with energy from in each case only one of the two expansion stages being utilized regeneratively for a respective compression stage.

20. Air-conditioning system for preparing air at superatmospheric pressure for air-conditioning a space, comprising:
- at least one compressor device (C; C1, C2), which is in communication with ambient air and compresses a partial air stream originating from the ambient air,
- at least one expansion device (T; T1, T2), and
- at least one heat exchanger,
**characterized by**
- a mixing element ("X"), in which the compressed ambient air stream is combined with a partial air stream which is at superatmospheric pressure and has been tapped off from an engine, known as the bleed air stream, to form a mixed air stream, the mixed air stream being expanded to a lower pressure in the at least one expansion device and in the process cooled, and the at least one heat exchanger being designed as a reheater (REH) which has the bleed air stream flowing through it on one side and the mixed air stream flowing through it on the other side.

21. Air-conditioning system according to Claim 20, **characterized in that** one heat exchanger (CON) of the at least one heat exchanger (REH, CON) is arranged in such a way that the mixed air stream flows through it after the mixed air stream has been expanded in the expansion device.

22. Air-conditioning system according to Claim 20 or 21, **characterized in that** one heat exchanger of the at least one heat exchanger (REH, CON) is arranged in such a way that the mixed air stream flows through it before the mixed air stream has been expanded in the expansion device.

23. Air-conditioning system according to one of Claims 20 to 22, **characterized in that** the expansion device (T; T1, T2) has at least one turbine wheel and the compressor device (C; C1, C2) has at least one compressor wheel on a common shaft.

24. Air-conditioning system according to one of Claims 20 to 23, **characterized in that** there is a motor for supplying system-external energy for the compressor device.

25. Air-conditioning system according to one of Claims 20 to 24, **characterized in that** the compressor device (C; C1, C2) and the expansion device (T; T1, T2) are designed in such a way that the ratio between the bleed air mass flow delivered and the ambient air mass flow delivered is in the range from 100/0 to 50/50.

26. Air-conditioning system according to Claim 25, **characterized in that** the ratio between bleed air mass flow and ambient air mass flow is approximately 65/35.

27. Air-conditioning system according to one of Claims 20 to 26, **characterized in that** a water extractor (WE2) is arranged between the mixing element ("X") and the expansion device (T; T1).

28. Air-conditioning system according to one of Claims 20 to 27, **characterized in that** a water extractor (WE1; WE3) for extracting water out of the compressed ambient air stream and/or the bleed air stream is provided upstream of the mixing element ("X"), as seen in the direction of flow.

29. Air-conditioning system according to one of Claims 20 to 28, **characterized in that** the system is designed in such a way that a pressure of the mixed air stream of approximately 3.4 bar is established at the mixing element ("X").

30. Air-conditioning system according to one of Claims 20 to 29, **characterized in that** the bleed air stream and the ambient air stream are guided past a cooling air stream through a dedicated additional heat exchanger (PHX or MHX), one of the additional heat exchangers (NHX) being used to cool the compressed ambient air stream and being arranged upstream, as seen in the direction of flow of the cooling air stream, of the additional heat exchanger (PHX) which is used to cool the bleed air stream.

31. Air-conditioning system according to Claim 30, **characterized in that** there is a water injection apparatus, by means of which water which has been extracted out of the bleed air stream and/or out of the mixed air stream and/or out of the compressed ambient air stream is fed to the cooling air stream, in order to be evaporated in it, upstream of the heat exchanger (MHX) which is used to cool the compressed ambient air stream.

32. Air-conditioning system according to one of Claims 21 to 31, **characterized in that** the expansion device comprises two turbine stages (T1, T2), and the heat exchanger (CON) is arranged between the two turbine stages.

33. Air-conditioning system according to Claim 32, **characterized in that** a water extractor (WE4) is arranged between the two turbine stages (T1, T2).

34. Air-conditioning system according to one of Claims 20 to 33, **characterized in that** the compressor comprises two compressor wheels (C1, C2) on separate shafts, and each compressor wheel (C1, C2) is arranged on a common shaft with in each case just one turbine wheel (T2 or T1, respectively).

35. Air-conditioning system according to Claim 34, **characterized in that** one of the shafts is additionally equipped with a motor (M), which can also act as a generator (G).

36. Air-conditioning system according to Claim 35, **characterized in that** a surge valve (CSV) is provided downstream of the compressor device (C1, C2), as seen in the direction of flow of the ambient air stream, in order to blow off the ambient air which has been sucked in in substantially uncompressed form.

37. Air-conditioning system according to one of Claims 20 to 35, **characterized in that** there is a bypass valve (BPV1) for admixing the compressed ambient air stream to the bleed air stream only after it has been expanded when flying.

38. Air-conditioning system according to one of Claims 20 to 37, **characterized in that** there is a bypass valve (BPV2) for feeding the bleed air stream past the mixing element ("X") directly to the expansion device (T; T1, T2) when flying.

## Revendications

1. Procédé pour le traitement de l'air pour le conditionnement d'air d'un espace, comprenant les étapes suivantes:
- soutirage d'un premier flux d'air partiel mis en surpression provenant d'un groupe moteur ou d'un groupe moteur auxiliaire, appelé flux d'air soutiré,
- soutirage et compression d'un second flux d'air partiel provenant de l'environnement,
- regroupement du flux d'air soutiré et du flux d'air ambiant comprimé pour la formation d'un flux d'air mixte,
- détente du flux d'air mixte et
- acheminement du flux d'air mixte pour le conditionnement d'air d'un espace,
le flux d'air soutiré étant guidé dans un échangeur de chaleur conçu comme réchauffeur (REH) en mode échange de chaleur en passant devant le flux d'air mixte, afin de refroidir le flux d'air soutiré avant le regroupement avec le flux d'air ambiant.

2. Procédé selon la revendication 1, **caractérisé en ce que** le flux d'air soutiré est guidé en passant devant le flux d'air mixte, une fois que le flux d'air mixte a été détendu.

3. Procédé selon la revendication 1 ou 2, **caractérisé en ce que** le flux d'air soutiré est guidé en passant devant le flux d'air mixte avant que le flux d'air mixte soit détendu.

4. Procédé selon l'une quelconque des revendications 1 à 3, **caractérisé en ce que** l'énergie utilisée pour la compression de l'air ambiant est obtenue lors de l'étape de la détente du flux d'air mixte et est utilisée de façon régénérative.

5. Procédé selon l'une quelconque des revendications 1 à 4, **caractérisé en ce que** de l'énergie étrangère au système est amenée pour la compression de l'air ambiant.

6. Procédé selon l'une quelconque des revendications 1 à 5, **caractérisé en ce que** le rapport entre le flux massique d'air soutiré et le flux massique d'air ambiant se situe entre 100/0 et 50/50.

7. Procédé selon la revendication 6, **caractérisé en ce que** le rapport entre le flux massique d'air soutiré et le flux massique d'air ambiant est d'environ 65/35.

8. Procédé selon l'une quelconque des revendications 1 à 7, **caractérisé en ce que** de l'eau est séparée du flux d'air mixte avant l'étape de la détente du flux d'air mixte.

9. Procédé selon l'une quelconque des revendications 1 à 8, **caractérisé en ce que** de l'eau est séparée du flux d'air soutiré et/ou du flux d'air ambiant comprimé avant l'étape de son regroupement.

10. Procédé selon l'une quelconque des revendications 1 à 9, **caractérisé en ce que** le flux d'air ambiant est comprimé lors de l'étape de la compression jusqu'à une pression de l'ordre de 0,8 bar à 4 bars.

11. Procédé selon l'une quelconque des revendications 1 à 10, **caractérisé en ce que** le flux d'air soutiré est mis à disposition avec une pression d'entrée de l'ordre de 1,5 bar en service aérien jusqu'à 4 bars en service au sol.

12. Procédé selon l'une quelconque des revendications 1 à 11, **caractérisé en ce que** les rapports de pression entre le flux d'air soutiré et le flux d'air ambiant sont choisis de telle sorte qu'une pression du flux d'air mixte de l'ordre de 3,4 bars s'établit en service au sol lors du regroupement du flux d'air soutiré et du flux d'air ambiant comprimé.

13. Procédé selon l'une quelconque des revendications 1 à 12, **caractérisé en ce que** le flux d'air soutiré est guidé en mode échange de chaleur en passant devant un flux séparé d'air de refroidissement et subit alors une perte de pression relativement élevée d'environ Δp = 0,05 bar jusqu'à Δp = 0,3 bar.

14. Procédé selon l'une quelconque des revendications 1 à 13, **caractérisé en ce que** le flux d'air ambiant comprimé est guidé en mode échange de chaleur en passant devant un flux séparé d'air de refroidissement et subit alors une perte de pression relativement faible d'environ Δp = 0,01 jusqu'à Δp = 0,05 bar.

15. Procédé selon les revendications 13 et 14, **caractérisé en ce que** d'abord le flux d'air ambiant comprimé et ensuite le flux d'air soutiré sont guidés en mode échange de chaleur en passant devant le flux séparé d'air de refroidissement.

16. Procédé selon l'une quelconque des revendications 13 à 15, **caractérisé en ce que** de l'eau séparée du flux d'air soutiré ou du flux d'air mixte et/ou du flux d'air ambiant comprimé est amenée dans le flux séparé d'air de refroidissement pour l'évaporation.

17. Procédé selon l'une quelconque des revendications 1 à 16, **caractérisé en ce que** la détente du flux d'air mixte s'effectue sur deux niveaux et le flux d'air mixte est guidé entre les deux niveaux de détente en mode échange de chaleur en passant devant le flux d'air soutiré pour le refroidissement du flux d'air soutiré.

18. Procédé selon la revendication 17, **caractérisé en ce que** de l'eau provenant du flux d'air mixte est évacuée après la détente du flux d'air mixte.

19. Procédé selon l'une quelconque des revendications 1 à 18, **caractérisé en ce que** l'étape de la compression du flux d'air ambiant et l'étape de la détente du flux d'air mixte s'effectuent à chaque fois sur deux niveaux, de l'énergie provenant respectivement de seulement l'un des deux niveaux de détente étant utilisée de façon régénérative à chaque fois pour un niveau de compression.

20. Système de conditionnement d'air pour le traitement de l'air mis en surpression pour le conditionnement d'air d'un espace, comprenant:
- au moins un dispositif compresseur (C; C₁; C₂) qui est en liaison avec de l'air ambiant et comprime un flux d'air partiel provenant de l'air ambiant,
- au moins un dispositif de détente (T; T₁; T₂), et
- au moins un échangeur de chaleur,
**caractérisé par**
- un élément de mélange ("X"), dans lequel le flux d'air ambiant comprimé est regroupé avec un flux d'air partiel soutiré sur un groupe moteur et mis en surpression, appelé flux d'air soutiré pour former un flux d'air mixte, le flux d'air mixte étant détendu dans le au moins un dispositif de détente à une pression inférieure et étant alors refroidi, le au moins un échangeur de chaleur étant conçu comme réchauffeur (REH) et étant traversé d'une part par le flux d'air soutiré et d'autre part par le flux d'air mixte.

21. Système de conditionnement d'air selon la revendication 20, **caractérisé en ce que**, sur les au moins un échangeur de chaleur (REH, CON), un échangeur de chaleur (CON) est disposé de telle sorte qu'il est traversé par le flux d'air mixte après que le flux d'air mixte ait été détendu dans le dispositif de détente.

22. Système de conditionnement d'air selon la revendication 20 ou 21, **caractérisé en ce que** sur le au moins un échangeur de chaleur (REH, CON), un échangeur de chaleur est disposé de telle sorte qu'il est traversé par le flux d'air mixte avant que le flux d'air mixte soit détendu dans le dispositif de détente.

23. Système de conditionnement d'air selon l'une quelconque des revendications 20 à 22, **caractérisé en ce que** le dispositif de détente (T; T1, T2) présente au moins une roue de turbine et le dispositif compresseur (C; C1, C2) au moins une roue de compresseur sur un arbre commun.

24. Système de conditionnement d'air selon l'une quelconque des revendications 20 à 23, **caractérisé en ce qu'**un moteur est prévu pour l'arrivée d'énergie étrangère au système pour le dispositif compresseur.

25. Système de conditionnement d'air selon l'une quelconque des revendications 20 à 24, **caractérisé en ce que** le dispositif compresseur (C; C1, C2) et le dispositif de détente (T; T1, T2) sont conçus de telle sorte que le rapport entre le flux d'air massique soutiré transporté et le flux d'air massique d'air ambiant transporté se situe dans la plage de 100/0 et 50/50.

26. Système de conditionnement d'air selon la revendication 25, **caractérisé en ce que** le rapport entre le flux massique d'air soutiré et le flux massique d'air ambiant se situe aux environs de 65/35.

27. Système de conditionnement d'air selon l'une quelconque des revendications 20 à 26, **caractérisé en ce qu'**un séparateur d'eau (WE2) est disposé entre l'élément de mélange ("X") et le dispositif de détente (T; T1).

28. Système de conditionnement d'air selon l'une quelconque des revendications 20 à 27, **caractérisé en ce que**, dans le sens d'écoulement et avant l'élément de mélange, ("X"), il est prévu un séparateur d'eau (WE1; WE3) pour la séparation d'eau du flux d'air ambiant comprimé et/ou du flux d'air soutiré.

29. Système de conditionnement d'air selon l'une quelconque des revendications 20 à 28, **caractérisé en ce que** le système est conçu de telle sorte qu'une pression du flux d'air mixte d'environ 3,4 bars s'établit sur l'élément de mélange ("X").

30. Système de conditionnement d'air selon l'une quelconque des revendications 20 à 29, **caractérisé en ce que** le flux d'air soutiré et le flux d'air ambiant sont guidés à travers des échangeurs de chaleur (PHX et MHX) supplémentaires prévus spécialement à cet effet en passant devant un flux d'air de refroidissement, l'un des échangeurs de chaleur (MHX) supplémentaires servant au refroidissement du flux d'air ambiant comprimé et étant disposé dans le sens d'écoulement du flux d'air de refroidissement avant l'échangeur de chaleur (PHX) supplémentaire, lequel sert au refroidissement du flux d'air soutiré.

31. Système de conditionnement d'air selon la revendication 30, **caractérisé en ce qu'**il est prévu un dispositif d'injection d'eau avec lequel de l'eau séparée du flux d'air soutiré et/ou du flux d'air mixte et/ou du flux d'air ambiant comprimé est amenée avant l'échangeur de chaleur (MHX), qui sert au refroidissement du flux d'air ambiant comprimé, dans le flux d'air de refroidissement pour y être évaporée.

32. Système de conditionnement d'air selon l'une quelconque des revendications 21 à 31, **caractérisé en ce que** le dispositif de détente comprend deux étages de turbine (T1, T2) et l'échangeur de chaleur (CON) est disposé entre les deux niveaux de turbine.

33. Système de conditionnement d'air selon la revendication 32, **caractérisé en ce qu'**un séparateur d'eau (WE4) est disposé entre les deux étages de turbine (T1, T2).

34. Système de conditionnement d'air selon l'une quelconque des revendications 20 à 33, **caractérisé en ce que** le compresseur comprend deux roues de compresseur (C1, C2) sur des arbres séparés et chaque roue de compresseur (C1, C2) est disposée respectivement avec seulement une roue de turbine (T2 ou T1) sur un arbre commun.

35. Système de conditionnement d'air selon la revendication 34, **caractérisé en ce que** l'un des arbres est équipé en supplément d'un moteur (M) qui peut agir également comme générateur (G).

36. Système de conditionnement d'air selon la revendication 35, **caractérisé en ce qu'**une vanne d'évacuation (CSV) est prévue dans le sens d'écoulement du flux d'air ambiant derrière le dispositif compresseur (C1, C2) afin d'évacuer largement sans compression l'air ambiant aspiré.

37. Système de conditionnement d'air selon l'une quelconque des revendications 20 à 35, **caractérisé en ce qu'**il est prévu une vanne de dérivation (BPV1) pour ajouter en service aérien le flux d'air ambiant comprimé au flux d'air soutiré seulement après sa détente.

38. Système de conditionnement d'air selon l'une quelconque des revendications 20 à 37, **caractérisé en ce qu'**il est prévu une vanne de dérivation (BPV2) pour amener en service aérien le flux d'air soutiré, en passant devant l'élément de mélange ("X"), directement au dispositif de détente (T; T1, T2).
